# EUROPÄISCHE PATENTSCHRIFT

(11) **EP 4 294 701 B1**
(45) Veröffentlichungstag und Bekanntmachung des Hinweises auf die Patenterteilung: **02.04.2025**
(21) Anmeldenummer: 22706789.9
(22) Anmeldetag: 15.02.2022
(51) Int. Cl.: B62D 5/00, B62D 1/16, B62D 15/02

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 22.02.2021 DE 102021201640
(43) Veröffentlichungstag der Anmeldung: 27.12.2023
(73) Patentinhaber: thyssenkrupp Presta AG, 9492 Eschen (LI); thyssenkrupp AG, 45143 Essen (DE)
(72) Erfinder: FORTE, Sebastian, 9493 Mauren (LI); SZEPESSY, Imre, 9493 Mauren (LI)
(74) Vertreter: thyssenkrupp Intellectual Property GmbH
(86) Internationale Anmeldenummer: PCT/EP2022/053698
(87) Internationale Veröffentlichungsnummer: WO 2022/175278

(56) Entgegenhaltungen:
- WO-A1-2020/115920
- WO-A1-2020/115920
- DE-A1- 102016 206 610
- DE-A1- 102018 209 236
- DE-A1- 102018 209 236
- DE-A1- 102019 210 096
- DE-A1- 102019 210 096
- JP-A- 2007 261 508
- JP-A- 2007 261 508
- US-A1- 2016 059 880
- US-A1- 2016 059 880
- US-A1- 2020 070 871
- US-A1- 2020 070 871

## Beschreibung

### Stand der Technik

Die Erfindung betrifft eine Lenksäule für ein Kraftfahrzeug, umfassend eine relativ zu einer Trageinheit um ihre Längsachse drehbar gelagerte Lenkwelle, einen Umdrehungsbegrenzer mit einem Endanschlag zur Begrenzung der Rotation der Lenkwelle, und einen über eine drehmomentschlüssige Verbindung mit der Lenkwelle gekuppelten Drehsensor.

In der fest mit der Fahrzeugkarosserie verbindbaren Trageinheit ist die Lenkwelle drehbar gelagert. In einer bevorzugten Ausführung ist die Lenkwelle in einem Lenksäulengehäuse, welche als Manteleinheit ausgebildet sein kann oder eine solche aufweisen kann, welches von der Trageinheit getragen wird, und bevorzugt relativ dazu verstellbar ist. Zur Lenkung des Kraftfahrzeugs wird durch Drehung des am fahrerseitigen, in Fahrtrichtung hinteren Ende der Lenkwelle angebrachten Lenkrads vom Fahrer ein manueller Lenkbefehl eingegeben, der in einen Lenkeinschlag der lenkbaren Räder des Kraftfahrzeugs umgesetzt wird.

Während bei einem konventionellen Lenksystem die Lenkwelle über ein Lenkgetriebe mechanisch mit den Rädern verbunden ist, wird in einem Steer-by-wire-Lenksystem die Rotation der Lenkwelle mittels eines Drehsensors, der mindestens einen Drehwinkel- und/oder Drehmomentsensor aufweist, erfasst und in ein elektrisches Steuersignal zur Ansteuerung von elektrischen Lenkaktoren umgesetzt. Durch die dabei fehlende mechanische Kopplung mit den Rädern wird die Drehung der Lenkwelle nicht durch den mechanischen Endanschlag der Räder bei Erreichen des maximalen Lenkeinschlags begrenzt. Um dennoch ein zu starkes Einlenken zu vermeiden und auch ein realistisches Lenkgefühl zu simulieren, ist es bekannt, den maximal möglichen Drehwinkel des Lenkrads mittels eines Umdrehungsbegrenzers zu beschränken, der eine Begrenzungseinrichtung mit einem Endanschlag zur Begrenzung der maximal möglichen Rotation der Lenkwelle bildet.

Eine Lenksäule mit einem Umdrehungsbegrenzer ist beispielsweise aus der DE 103 12 516 A1 bekannt. Um einen Lenkeinschlag über mehrere Umdrehungen zu ermöglichen, sind an der Lenkwelle und an der Trageinheit gegeneinander verdrehbare Scheiben angebracht, welche bezüglich der Längsachse mehrfach umlaufende Spiralbahnen aufweisen, die über ein darin entlang gleitendes Formschlusselement miteinander zusammenwirken. Dadurch, dass besagtes Formschlusselement am Ende der Bahnen formschlüssig anschlagen kann, wird ein Endanschlag gebildet, der die relative Verdrehung der Scheiben und damit den maximal möglichen Drehwinkel der Lenkwelle begrenzt. Dadurch kann eine sichere Umdrehungsbegrenzung mit einer hohen Belastbarkeit bezüglich des eingeleiteten Lenkmonats realisiert werden. Nachteilig ist jedoch, dass bei einer Überlastung, beispielsweise durch ein bei einem Unfall einwirkendes oder missbräuchlich auf das Lenkrad ausgeübtes extrem hohes Lenkmoment, die Lenkwelle und/oder der Umdrehungsbegrenzer in ihrer Funktion derart beeinträchtigt werden können, beispielsweise brechen oder unlösbar blockiert werden, dass der Drehsensor ausfällt. So können bei einer Abtrennung der Lenkwelle vom Drehsensor, oder auch bei einer Blockierung des Umdrehungsbegrenzers, keine Steuersignale von dem Drehsensor durch Drehung des Lenkrads erzeugt werden, wodurch das Risiko eines Totalausfalls der Lenkung besteht. In der Patentanmeldung DE102016206610 wird eine gattungsgemäße Lenksäule offenbart.

Angesichts der vorangehend erläuterten Problematik ist es eine Aufgabe der vorliegenden Erfindung, bei einer Lenksäule der eingangs genannten Art eine erhöhte Betriebssicherheit zu ermöglichen.

### Darstellung der Erfindung

Diese Aufgabe wird erfindungsgemäß gelöst durch das Lenksystem mit den Merkmalen des Anspruchs 1. Vorteilhafte Weiterbildungen ergeben sich aus den Unteransprüchen.

Bei einer Lenksäule für ein Kraftfahrzeug, umfassend eine relativ zu einer Trageinheit um ihre Längsachse drehbar gelagerte Lenkwelle, einen Umdrehungsbegrenzer mit einem Endanschlag zur Begrenzung der Rotation der Lenkwelle, und einen über eine drehmomentschlüssige Verbindung mit der Lenkwelle gekuppelten Drehsensor, ist erfindungsgemäß vorgesehen, dass der Umdrehungsbegrenzer ein Grenzmoment (Endanschlag-Bruchmoment) aufweist, bei dessen Überschreiten die Rotation der Lenkwelle über den Endanschlag hinaus freigegeben wird, wobei das Grenzmoment kleiner ist als ein maximales Übertragungsmoment (Verbindungs-Bruchmoment) der Verbindung zwischen Lenkwelle und Drehsensor, wobei der Umdrehungsbegrenzer eine Sollbrucheinrichtung aufweist.

Der Erfindung liegt der neuartige Ansatz zugrunde, die Drehmoment-Charakteristiken bezüglich des Zusammenwirkens der Lenkwelle mit dem Umdrehungsbegrenzer und dem Drehsensor derart zu definieren und aufeinander abzustimmen, dass die Funktion des Drehsensors in den eingangs genannten Ausnahmesituationen besser gewährleistet ist.

Gemäß der Erfindung wird der Umdrehungsbegrenzer derart ausgestaltet, dass er ein definiertes Grenzmoment aufweist, welches gleichbedeutend als Endanschlag-Bruchmoment bezeichnet wird. Solange im normalen Betrieb der Betrag des in die Lenkwelle eingegebenen Lenkmoments unterhalb des Grenzmoments bleibt, wird die Drehung der Lenkwelle beim Erreichen des Endanschlags gestoppt und dadurch in bekannter Weise der maximal mögliche Lenkwinkel begrenzt. In diesem Normalbetrieb ist das über die Lenkwelle zum Drehsensor geleitete Übertragungsmoment relativ gering und im Wesentlichen durch Lagerreibung der Lenkwellenlager, des Umdrehungsbegrenzers und des Drehsensors bestimmt.

Wird bei einem Unfall oder durch Missbrauch ein extrem hohes Lenkmoment in die Lenkwelle eingeleitet, welches höher ist als das Grenzmoment, wird die Lenkwelle über den Endanschlag hinaus weiter verdreht. Das Grenzmoment kann auch bei einer Funktionsstörung des Umdrehungsbegrenzers überschritten werden, beispielsweise bei einer Blockierung vor dem Erreichen des Endanschlags. Im Stand der Technik besteht in beiden Fällen das Ausfallrisiko des Drehsensors, wie oben erläutert.

Erfindungsgemäß weist die Verbindung der Lenkwelle mit dem Drehsensor ein definiertes maximales Übertragungsmoment auf, welches gleichbedeutend auch als Verbindungs-Bruchmoment bezeichnet wird und die maximale Torsionsbelastbarkeit angibt. Dieses Verbindungs-Bruchmoment wird erfindungsgemäß zum Endanschlag-Bruchmoment des Umdrehungsbegrenzers in Relation gesetzt. Konkret werden die Lenkwelle und die Verbindung mit dem Drehsensor ausgestaltet, dass ihre Torsionsbruchfestigkeit höher ist als das maximal erreichbare Grenzmoment, wenn der Endanschlag des Umdrehungsbegrenzers durch rohe Gewalteinwirkung überwunden wird. Daraus resultiert der Vorteil, dass die Verbindung zwischen Lenkwelle und Drehsensor auch bei einer Überlastung oder einem Ausfall des Umdrehungsbegrenzers in jedem Fall erhalten bleibt. Auf diese Weise wird die Funktionsfähigkeit des Drehsensors gesichert, und die Lenkfähigkeit des Fahrzeugs bleibt bei einem Unfall oder missbräuchlicher Überbeanspruchung gewährleistet Folglich wird das Sicherheitsniveau erhöht.

Im Überlastfall, wenn entweder der Umdrehungsbegrenzer den Endanschlag erreicht oder aufgrund einer Funktionsstörung blockiert wird, übersteigt das zwischen Lenkwelle und Drehsensor anliegende Übertragungsmoment den Grenzwert des Umdrehungsbegrenzers. Während im Stand der Technik das Risiko besteht, dass dann die Verbindung der Lenkwelle zum Drehsensor getrennt wird, ist durch das erfindungsgemäß höhere Verbindungs-Bruchmoment sichergestellt, dass die Verbindung der Lenkwelle erhalten bleibt und eine manueller Lenkbefehl weiter durch den Drehsensor erfasst werden kann.

Erfindungsgemäß ist vorgesehen, dass der Umdrehungsbegrenzer eine Sollbrucheinrichtung aufweist. Die Sollbrucheinrichtung ist derart ausgestaltet, dass sie eine Drehung der Lenkwelle relativ zur Trageinheit freigibt, wenn das definierte Grenzmoment erreicht bzw. überschritten wird. In einem solchen Überlastfall kann die Lenkwelle relativ zur Trageinheit durchgedreht werden, insbesondere über den Endanschlag hinaus.

Bevorzugt kann die Sollbrucheinrichtung ein zwischen der Lenkwelle und der Trageinheit angebrachtes Sollbruchelement aufweisen. Dieses bricht beim Überschreiten des Grenzmoments und sorgt für eine - beispielsweise irreversible - Trennung, die den Umdrehungsbegrenzer außer Funktion setzt. Dadurch, dass das Sollbruchmoment kleiner ist als das Verbindungs-Bruchmoment, resultiert der Vorteil, dass die Verbindung zwischen Lenkwelle und Drehsensor bei der Trennung des Sollbruchelements in jedem Fall sicher erhalten bleibt. Ein weiterer Vorteil ist, dass ein Sollbruchelement konstruktiv einfach und dabei mit geringem Bauraumbedarf und hoher Funktionssicherheit bereitgestellt werden kann.

In einer vorteilhaften Weiterbildung kann es vorgesehen sein, dass die Lenkwelle in einem Winkel von gleich oder mehr als 180°, bevorzugt mehr als 360°, zwischen den Endanschlägen des Umdrehungsbegrenzers rotierbar ist. Es hat sich gezeigt, dass Lenkeinschläge von dem linken zu dem rechten Endanschlag von mehr als 180° und insbesondere von mehr als 360° durch die Mehrheit der Fahrzeugführer als angenehm empfunden wird und eine feinfühliges Lenken ermöglicht.

In einer weiteren vorteilhaften Weiterbildung kann es vorgesehen sein, dass die Lenkwelle in einem Winkel von gleich oder weniger als 900° zwischen den Endanschlägen des Umdrehungsbegrenzers rotierbar ist. Es hat sich gezeigt, dass Lenkeinschläge von dem linken zu dem rechten Endanschlag von gleich oder weniger als 900° durch die Mehrheit der Fahrzeugführer als angenehm empfunden wird und ein ausreichend direktes Lenken ermöglicht.

Es kann vorgesehen sein, dass der Umdrehungsbegrenzer eine Überlastkupplung aufweist. Eine derartige Überlastkupplung kann zwischen Lenkwelle und Umdrehungsbegrenzer eingesetzt sein, oder zwischen Umdrehungsbegrenzer und Trageinheit, und/oder in den Umdrehungsbegrenzer integriert sein. Bei Überschreiten des Grenzmoments wird die Überlastkupplung entkuppelt, beispielsweise durch - bevorzugt reversibles - Lösen eines Kraft- und/oder Formschlusseingriffs. Beispielsweise kann eine Reib- oder Rutschkupplung sein, die durchrutscht, wenn das zwischen Lenkwelle und Trageinheit anliegende Lenkmoment ein definiertes maximales Übertragungsmoment überschreitet. Ein Vorteil einer derartigen Überlastkupplung ist neben einer einfachen, raumsparenden und funktionssicheren Realisierbarkeit, dass beim Durchrutschen im Überlastfall eine Dejustierung des Endanschlags auftreten kann, aber die Grundfunktionalität im Wesentlichen erhalten bleibt, so dass eine Instandsetzung durch Neukalibrierung erfolgen kann.

Es kann vorgesehen sein, dass die Lenkwelle drehfest mit einer Sensorwelle des Drehsensors verbunden ist. Dann wird das Übertragungs- bzw. Verbindungs-Bruchmoment durch die Torsionsbruchfestigkeit von Lenkwelle, Sensorwelle und deren drehfester Verbindung bestimmt, was in vorteilhafter Weise mit geringem Aufwand bewerkstelligt werden kann. Eine effektive Möglichkeit besteht beispielsweise darin, dass die Lenkwelle einstückig mit einer Sensorwelle des Drehsensors ausgebildet ist. Mit andern Worten ist die Lenkwelle mit dem Drehsensor durchgehend ausgebildet, so dass das Verbindungs-Bruchmoment konstruktiv einfach durch den Querschnitt der Lenkwelle und deren Werkstoffeigenschaften vorgegeben werden kann.

Eine bevorzugte Ausführung kann vorsehen, dass der Drehsensor einen frei rotierbaren Drehgeber aufweist. In dieser Bauform weist der Drehsensor keinen internen Winkel-Endanschlag auf. Der Drehgeber umfasst ein mit der Lenkwelle gekuppeltes, um die Längsachse drehbares Sensorelement, beispielsweise eine Sensor- oder Geberwelle, welche relativ zu einem korrespondierenden, bezüglich der Trageinheit feststehenden Nehmerelements endlos rotierbar ist. Derartige frei rotierbare Drehsensoren haben den Vorteil, dass sie auch beim Überschreiten des Endanschlags des Umdrehungsbegrenzers im Überlastfall nicht beschädigt werden und weiterhin Steuersignale liefern können.

Es kann vorgesehen sein, dass der Drehsensor separat vom dem Umdrehungsbegrenzer ausgebildet ist. Dadurch ist kein im Drehsensor integrierter Endanschlag erforderlich, der entsprechend kleiner und kostengünstiger ausfallen kann, bevorzugt auch mit einem frei rotierbaren Drehgeber. Durch die funktionale Trennung kann die jeweilige konstruktive Anpassung von Umdrehungsbegrenzer und Drehsensor mit geringem Aufwand optimiert werden, insbesondere auch im Hinblick auf die erfindungsgemäße Ausgestaltung von Grenz- und Übertragungsmoment, d.h. dem Übertragungs- bzw. Verbindungs-Bruchmoment.

Der Drehsensor kann beispielsweise einen Absolutwert- oder Inkrementalgeber aufweisen, der bevorzugt nach einem kontaktlosen Messverfahren arbeitet, beispielsweise induktiv, kapazitiv, optisch oder dergleichen. Derartige Sensoren sind mit den geforderten Spezifikationen in vielfältigen Ausführungen erhältlich und können mit geringem Aufwand in die Lenksäule integriert werden.

Es ist möglich, dass mindestens zwei Drehsensoren vorgesehen sind. Dadurch kann eine redundante Messanordnung bereitgestellt werden, welche die Betriebs- und Ausfallsicherheit erhöht. Dabei können bevorzugt unterschiedliche Messprinzipien zum Einsatz kommen, wodurch die Betriebs- und Ausfallsicherheit weiter erhöht werden kann, und gegebenenfalls auch die Messgenauigkeit.

Es kann bevorzugt vorgesehen sein, dass der Drehsensor mindestens einen Drehwinkel- und/oder Drehmomentsensor aufweist. Die Drehwinkelmessung ermöglicht die Erfassung von manuell über das Lenkrad eingegebenen Lenkbefehlen zur Erzeugung von Steuersignalen. Mittels eines Drehmomentsensors kann das an der Lenkwelle anliegende Drehmoment erfasst werden, um beispielsweise das tatsächliche manuelle Lenkmoment zu überwachen, und gegebenenfalls durch Erzeugung eines in die Lenkwelle eingekoppelten Feedback-Moments ein realistisches Lenkgefühl zu erzeugen.

Es ist möglich, dass der Drehsensor ausgebildet ist, eine Drehung der Lenkwelle über den Endanschlag hinaus zu erfassen. Dadurch kann eine Überschreitung des Endanschlags detektiert werden, wodurch ein Überlastfall zuverlässig erfasst werden kann. Dieser kann angezeigt werden, und bei der Erzeugung von Lenkungs- und/oder Fahrzeug-Steuersignalen berücksichtigt werden, beispielsweise durch automatisierte Aktivierung von Notfallmaßnahmen. Außerdem ist es vorteilhaft, dass auch nach dem Überschreiten des Endanschlags im Betrieb weiterhin Drehwinkel- und/oder Drehmomentwerte erfasst werden, auch wenn möglicherweise eine Dejustierung auftreten kann.

Die Lenkwelle kann in einem von der Trageinheit gehaltenen Lenksäulengehäuse gelagert sein. Das Lenksäulengehäuse weist die Drehlagerung für die Lenkwelle auf, und kann als Teil einer Manteleinheit ausgebildet sein, oder selbst eine solche bilden. Es sind Bauformen von Manteleinheiten bekannt, die beispielsweise einen die Lenkwelle zumindest abschnittweise umschließenden Führungskasten, ein oder mehrere, vorzugsweise zur Längsachse koaxiale Mantelrohre oder dergleichen aufweisen.

Es kann vorgesehen sein, dass das Lenksäulengehäuse relativ zur Trageinheit feststehend, oder in einer Längsrichtung parallel zur Längsachse und/oder in einer Höhenrichtung quer zur Längsachse verstellbar ist. Die Verstellung ermöglich eine Anpassung der Lenkradposition an die Fahrerposition. Eine Längsverstellung kann durch eine Verstellung des Lenksäulengehäuses oder der Manteleinheit relativ zur Trageinheit in Richtung der Längsachse erfolgen, oder durch ein in Längsrichtung längenveränderbar ausgestaltetes Lenksäulengehäuse, welches beispielsweise eine Manteleinheit mit teleskopartig verstellbar angeordneten Mantelrohren aufweisen kann. Dabei kann die Lenkwelle relativ zum Lenksäulengehäuse oder zur Trageinheit in Richtung der Längsachse fest angeordnet oder verstellbar sein.

Eine Höhenverstellung kann beispielsweise in an sich bekannter Weise dadurch realisiert sein, dass eine Manteleinheit im lenkradfernen, in Fahrtrichtung vorderen Bereich um eine horizontale, quer zur Längsachse angeordnete Schwenkachse an der Trageinheit nach oben und unten schwenkbar gelagert ist. Dadurch kann das hinten an der Lenkwelle angebrachte Lenkrad im Fahrzeuginnenraum in der Höhe verstellt werden.

Längs- und Höhenverstellung können bedarfsweise einzeln oder in Kombination vorgesehen sein. Dabei kann die Verstellung manuell erfolgen, oder mittels motorischer Verstellantriebe, die in an sich bekannter Weise jeweils einen von einem elektrischen Stellmotor motorisch antreibbaren Spindeltrieb aufweisen können.

Zur Erzeugung eines realistischen Fahrgefühls kann es vorgesehen sein, dass ein Feedback-Aktuator mit der Lenkwelle gekoppelt ist. Hierzu ist es bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator kann bevorzugt in die Lenksäule des Fahrzeugs integriert sein und weist einen Handmoment- oder Lenkradsteller mit einer Antriebseinheit auf, die abhängig vom Rückkopplungs-Signal ein dem realen Reaktionsmoment entsprechendes Rückstellmoment oder Feedbackmoment über die Lenkwelle in das Lenkrad einkoppelt. Derartige "Force-feedback"-Systeme geben dem Fahrer den Eindruck einer realen Fahrsituation wie bei einer konventionellen Lenkung, was eine intuitive Reaktion erleichtert.

In einer vorteilhaften Ausgestaltung kann vorgesehen sein, dass der Umdrehungsbegrenzer einen mit der Lenkwelle drehfest verbundenen Wickelkern aufweist, an dem ein mit der Trageinheit verbundenes, langgestrecktes und quer zu seiner Längserstreckung flexibel verformbares Bandelement angebracht ist, welches mindestens einen Bandabschnitt aufweist, der auf dem Wickelkern in einem Wickelsinn um die Längsachse aufwickelbar ist. Das Bandelement kann bevorzugt mit einem Lenksäulengehäuse verbunden sein, in dem die Lenkwelle drehbar gelagert ist und welches von der Trageinheit gehalten wird.

Ein derartiger Umdrehungsbegrenzer weist ein flexibles langgestrecktes Bandelement aus, welches auf einem mit der Lenkwelle drehfest verbundenen Wickelkern aufgewickelt ist, an dem das eine, nämlich das innere Ende des Bandelements befestigt ist. Das andere, äußere Ende des Bandelements ist mit der Trageinheit bzw. dem Lenksäulengehäuse fest verbunden. Die Lenkwelle kann durch Betätigung des Lenkrads in eine Drehrichtung, welche dem Wickelsinn des Bandelements entspricht, so weit gedreht werden, bis der Bandabschnitt des Bandelements vollständig dicht auf dem Wickelkern aufgewickelt ist. Dadurch, dass dann das Bandelement zwischen dem Wickelkern und dem Lenksäulengehäuse auf Zug gespannt ist, wird der maximale Lenkwinkel begrenzt und eine weitere Drehung in dieser Drehrichtung ist nicht möglich.

Ein derartiger Umgehungsbegrenzer kann mit geringem Aufwand und bei kompakter Bauform für einen relativ großen Lenkwinkelbereich ausgelegt werden. Eine erfindungsgemäße Ausgestaltung kann dadurch realisiert werden, dass das Bandelement ein Sollbruchelement aufweist, der beispielsweise als Sollbruchabschnitt oder Sollrissabschnitt ausgebildet ist, in dem das Bandelement mit einem definiert verkleinerten Querschnitt versehen ist. Dieser kann einfach derart bemessen werden, dass der Bandabschnitt bei einem vorgegebenen Grenzwert, der mit einem definierten Grenzmoment des Umdrehungsbegrenzers korrespondiert, reißt oder bricht und dadurch die Rotation der Lenkwelle samt Wickelkern relativ zur Trageinheit bzw. zum Lenksäulengehäuse freigibt.

Ein Vorteil dieser Bauform ist, dass das Grenzmoment einfach, präzise und zuverlässig durch die Gestaltung des Sollbruchabschnitts des Bandelements vorgegeben werden kann.

Eine vorteilhafte Weiterbildung kann vorsehen, dass der Wickelsinn des Bandabschnitts umkehrbar ist. Dadurch ist es möglich, dass derselbe Bandabschnitt in demselben axialen Wickelbereich des Wickelkerns wahlweise in rechts- oder linksdrehendem Wickelsinn aufgespult bzw. aufgewickelt werden kann.

Dadurch, dass ein Bandabschnitt alternativ in beiden möglichen, gegensinnigen Wickel- bzw. Drehrichtungen auf dem Wickelkern aufwickelbar ist, kann mittels eines einzigen Bandelements eine Drehwinkelbegrenzung in beide möglichen Drehrichtungen erfolgen. Daraus resultieren die Vorteile, dass der Fertigungs- und Montageaufwand geringer ist als im Stand der Technik, in dem zwei Bandelemente erforderlich sind. Außerdem wird weniger Bauraum benötigt, so dass in vorteilhafter Weise eine kompakte Bauweise des Umdrehungsbegrenzers ermöglicht wird.

Bevorzugt weist der Bandabschnitt eine erste Oberfläche auf und eine dazu gleichsinnig ausgebildete zweite Oberfläche auf, wobei in dem einen Wickelsinn die erste Oberfläche mit dem Wickelkern in Kontakt bringbar ist und die zweite Oberfläche in dem umgekehrten Wickelsinn mit dem Wickelkern in Kontakt bringbar ist. Mit anderen Worten liegt je nach Wickelsinn die erste Oberfläche oder die zweite Oberfläche des Bandabschnitts an dem Wickelkern an.

In der neutralen Position, welche der Mittelstellung der Lenkung zwischen den beiden durch den Umdrehungsbegrenzer bereitgestellten Endpositionen des maximalen Drehwinkels entspricht, dies sind die Endanschläge bzw. Anschlagpositionen, ist das Bandelement bei der Erfindung von dem Wickelkern abgewickelt. Wird das Lenkrad aus der Mittelstellung nach rechts oder links verdreht, wird das Bandelement entsprechend rechtsdrehend oder - mit umgekehrtem Wickelsinn - linksdrehend auf dem Wickelkern aufgewickelt. In beiden Fällen wird die Umdrehungsbegrenzung erreicht, wenn der zur Verfügung stehende Wickelabschnitt auf dem Wickelkern aufgewickelt ist. Dann ist ein Endanschlag realisiert, bei dem das Bandelement das zwischen dem Wickelkern und dem Lenksäulengehäuse anliegende Lenkmoment aufnimmt.

Es wird ein einfacher und robuster Aufbau des Umdrehungsbegrenzers ermöglicht, der im Betrieb eine hohe Laufruhe hat. Darüber hinaus ist die Funktion weniger empfindlich gegenüber Bauteil- und Maßtoleranzen.

In der Anschlagsituation ist das Bandelement auf Zug beansprucht. Bevorzugt ist das Bandelement in Zugrichtung steifer als in zumindest eine Biegerichtung.

Es kann bevorzugt vorgesehen sein, dass der Bandabschnitt zwischen dem Wickelkern und der Trageinheit bzw. dem Lenksäulengehäuse unabhängig vom Wickelsinn in beiden Wickelrichtungen ein gleichgroßes Rückstellmoment ausübt. Das Bandelement wird beim Aufwickeln fortlaufend umgebogen, und übt durch die dabei der Umbiegung entgegenwirkende Reaktionskraft zwischen Wickelkern und Lenkgehäuse ein Rückstellmoment auf die Lenkwelle aus. Die Größe des Rückstellmoments ist abhängig von den biegeelastischen Eigenschaften des Bandelements. Für die primäre, den Drehwinkel begrenzende Funktion des Umdrehungsbegrenzers ist es wesentlich, dass das Rückstellmoment für beide Drehrichtungen des Lenkrads möglichst identisch ist. Um dies bei der Erfindung zu realisieren, ist erfindungsgemäß der Bandabschnitt des Bandelements bezüglich der Umbiegung beim Aufwickeln bevorzugt symmetrisch ausgestaltet. Dadurch kann der Biegeabschnitt quer zu seiner Längserstreckung mit der gleichen Kraft nach rechts oder links umgebogen werden, und entsprechend erfordert das Aufwickeln auf den Wickelkern im Wickelsinn und im entgegengesetzten Wickelsinn im Wesentlichen dasselbe Moment, welches als Rückstellmoment an der Lenkwelle anliegt. Dass dieses erfindungsgemäß "gleichgroß" ist, meint, dass jeweils im gleichen Wickelzustand für einen Drehwinkel der Betrag der Rückstellkraft innerhalb vorgegebener Toleranzgrenzen übereinstimmt.

Eine Ausführung der Erfindung kann dadurch realisiert sein, dass der Wickelkern einen Außenmantel aufweist. Bevorzugt ist dieser Außenmantel zylindrisch ausgebildet. Bevorzugt ist der von einem hohlzylindrischen Innenmantel des Lenksäulengehäuses mit radialem Abstand umgeben. Der zylindrische Außenmantel weist einen Wickelabschnitt mit einer axialen Breite auf, die bevorzugt an die Breite des Bandabschnitts angepasst ist. Dadurch, dass erfindungsgemäß in axialer Richtung lediglich ein Bandelement erforderlich ist, kann die axiale Abmessung des Außenmantels geringer sein als im Stand der Technik, bei dem zwei spiralförmige Bandelemente in axialer Richtung nebeneinander angeordnet sind. Daraus resultiert der Vorteil einer kompakteren Bauform. Der Außenmantel des Wickelkerns ist bevorzugt koaxial in einem hohlzylindrischen Innenraum des Lenkgehäuses angeordnet, welches den Wickelkern über seinen Umfang durchgehend, oder zumindest segmentweise umgibt. Der hohlzylindrische Innenraum kann in einem trommel- oder rohrförmigen Abschnitt des Lenkgehäuses ausgebildet sein, dessen Innenmantel einen vorgegebenen radialen Abstand zum Außenmantel hat. Es kann bevorzugt vorgesehen sein, dass das Lenkgehäuse mit einem Deckel verschlossen, bevorzugt luftdicht und/oder flüssigkeitsdicht verschlossen ist unter Verwendung eines entsprechenden Dichtelements.

Der radiale Abstand zwischen Außen- und Innenmantel kann bevorzugt so bemessen werden, dass er größer ist als ein zulässiger minimaler Biegeradius des Bandabschnitts. Dieser zulässige minimale Biegeradius gibt an, wie stark das Bandelement quer zu seiner Längserstreckung reversibel umgebogen werden kann, wobei keine oder zumindest keine relevante plastische Verformung des Bandelements auftritt. Dadurch kann sichergestellt werden, dass das Bandelement in der neutralen Mittelstellung zwischen dem Wickelkern und dem Lenksäulengehäuse zur erfindungsgemäßen Umkehrung des Wickelsinns quer zu seiner Längserstreckung von der einen in die andere Richtung umgebogen werden kann.

Es kann vorgesehen sein, dass der Außendurchmesser des Außenmantels kleiner oder gleich dem 0,5-fachen Innendurchmesser des Innenmantels ist. Dadurch kann ein radialer Abstand zwischen Innen- und Außenmantel realisiert werden, der größer oder gleich dem 0,5-fachen Außendurchmesser des Außenmantels ist, welcher dem Biegeradius des Bandabschnitts beim Aufwickeln auf den Wickelkern entspricht. Durch dieses Verhältnis zwischen Innen- und Außendurchmesser wird das Bandelement beim Wechsel des Wickelsinns nicht oder zumindest nicht wesentlich stärker umgebogen, als beim Aufwickeln. Die Biegebeanspruchung des Materials bleibt durch so gering, dass eine Vielzahl von Umkehrungen des Wickelsinns ohne Materialschäden möglich ist, und eine hohe Langlebigkeit und Zuverlässigkeit erreicht wird.

Es ist möglich, dass die Länge des Bandabschnitts zwischen dem Wickelkern und dem Lenksäulengehäuse kleiner ist als der Innenumfang des Innenmantels, bevorzugt kleiner als die 0,5-fache Summe des Innenumfangs und des Außenumfangs. In der neutralen Mittelstellung ist der auf dem Wickelkern aufwickelbare Bandabschnitt vom Wickelkern abgewickelt, und befindet sich freiliegend zwischen Innen- und Außenmantel. Durch das angegebene Verhältnis kann sich der Bandabschnitt über seine gesamte freie Länge von innen an den Innenmantel anschmiegen, so dass bei der Umkehrung des Wickelsinns im Durchgang durch die Mittelstellung eine relativ geringe und damit materialschonende Umbiegung auftritt.

Es ist vorteilhaft, dass der Bandabschnitt zwischen dem Wickelkern und dem Lenksäulengehäuse als Zugtrum ausgebildet ist. Beim Erreichen des maximal zulässigen Drehwinkels ist der Bandabschnitt auf dem Wickelkern aufgewickelt, und zwischen den gegeneinander verdrehbaren Umfangsabschnitten von Wickelkern und Lenksäulengehäuse gespannt. Dabei ist es günstig, dass das Bandelement im Zugtrum im Wesentlichen auf Zug beansprucht wird, so dass es das in das Lenkrad eingegebene Lenkmoment sicher als Zugkraft aufnehmen kann, ohne dass zusätzliche Stütz- oder Sicherungsmaßnahmen erforderlich sind. "Im Wesentlichen auf Zug beansprucht" meint, dass im Fall einer Vergleichsspannung, beispielsweise nach der Gestaltänderungsenergiehypothese, zumindest 90% auf die Zugspannung entfallen.

Eine vorteilhafte Ausführung ist, dass mindestens zwei Bandabschnitte vorgesehen sind. Die Bandabschnitte können über den Umfang verteilt angeordnet sein, bevorzugt gleichmäßig verteilt. Es können beispielsweise zwei Zugtrume gemäß der vorangehend beschriebenen Ausführung radial gegenüberliegend mit der Außenmantelfläche des Wickelkerns verbunden sein, und entsprechend mit dem Lenksäulengehäuse. Dadurch kann vorteilhaft eine redundante Anordnung geschaffen werden, die auch beim Ausfall eines Bandabschnitts eine zuverlässige Drehwinkelbegrenzung bietet.

Eine vorteilhafte Weiterbildung sieht vor, dass der Bandabschnitt mindestens zweigängig übereinander wickelbar ist.

Eine vorteilhafte Weiterbildung sieht vor, dass zumindest zwei Bandabschnitte mindestens zweigängig übereinander wickelbar sind. Dabei können bevorzugt zwei im selben axialen Wickelabschnitt am Wickelkern angreifende Zugtrume je nach Drehrichtung mit demselben Wickelsinn gemeinsam aufgewickelt werden. Dabei werden die zwei Bandabschnitte in radialer Richtung übereinander gewickelt, so dass die beiden Bandabschnitte in Form einer zweigängigen Spirale angeordnet sind. Vorteilhaft ist dabei, dass zwei - oder mehr - Bandabschnitte ohne Vergrößerung des axialen Bauraums auf dem Wickelkern aufgenommen werden können. Dadurch kann eine kompakte, redundante Anordnung realisiert werden.

Der Wickelkern und/oder das Lenksäulengehäuse können mindestens einen Querschlitz aufweisen, durch die das Bandelement hindurchgeführt ist. Ein Querschlitz bildet einen Schlitz, der beispielsweise quer zur Längsachse durch den Wickelkern durchgehen kann. Entsprechend kann ein den Wickelkern trommelförmig umgebendes Lenksäulengehäuse pro Bandabschnitt einen von dem Innenmantel radial nach außen quer durchgehenden Querschlitz aufweisen. Ein Bandelement kann einfach in den oder die Querschlitze eingehängt werden, so dass es bezüglich der beim Aufwickeln auftretenden, in Umfangsrichtung wirkenden Kräfte in beiden Wickelrichtungen zuverlässig am Wickelkern und/oder am Lenksäulengehäuse befestigt ist. Eine vorteilhafte Weiterbildung ist, dass der oder die Querschlitze stirnseitig, also axial offen sind, so dass ein flaches Bandelement in seiner Breite in Richtung der Längsachse axial in den Querschlitz eingesetzt und fixiert werden kann.

Es kann vorteilhaft sein, dass das Bandelement als geschlossene Schlaufe ausgebildet ist. Eine geschlossene Schlaufe weist ein ringförmiges Endlosband auf, welches aufgrund seiner geschlossenen Form mit geringem Aufwand ohne zusätzliche Befestigungselemente durch Einhängen am Wickelkern und am Lenksäulengehäuse befestigt werden kann. Zum Einhängen können beispielsweise hakenförmige Aufhänger oder Widerlager am Wickelkern und am Lenksäulengehäuse angeordnet sein. Eine mit geringem Aufwand realisierbare, zuverlässige Anordnung zur Befestigung der geschlossenen Schlaufe kann dadurch geschaffen werden, dass das Bandelement durch einen quer durch den Wickelkern hindurchgehenden Querschlitz hindurchgeführt ist. Aus dem Querschlitz tritt das Bandelement über zwei diametral von dem Wickelkern radial nach außen abgehende Zugtrume aus, die sich als Bandabschnitte bis zur Innenseite des Lenksäulengehäuses erstrecken und dort durch zwei - ebenfalls bezüglich der Längsachse einander diametral angeordnete - nach außen durchgehende Querschlitze hindurchgeführt sind. Zwischen diesen beiden Querschlitzen ist das Bandelement außen um das Lenksäulengehäuse herumgeführt. In den Querschlitzen ist das Bandelement in Umfangsrichtung relativ zum Außenmantel des Kernelements, und auch relativ zum Lenksäulengehäuse fixiert. Wenn die Querschlitze axial offen ausgebildet sind, kann die geschlossene Schlaufe des Bandelements zur Montage einfach axial in die Querschlitze eingesetzt werden. Auf diese Weise kann ohne weitere Befestigungsmittel eine besonders zuverlässige Verbindung erzeugt werden. Ein Vorteil für die erfindungsgemäße Umkehrung des Wickelsinns ist dabei, dass die Bandabschnitte aus den Querschlitzen in radialer Richtung ausmünden, so dass sie in beide Umfangsrichtungen umgebogen werden können.

Das Bandelement kann vorzugsweise aus einem ein Fasergewebe ausgebildet sein, beispielsweise einem Cord. Ein Fasergewebe kann durch Einsatz hochfester Fasern - beispielsweise Metall-, Aramid- oder Kohlefasern, oder dergleichen - hoch zugbelastbar, und dabei besonders flexibel ausgestaltet sein. Die hohe Flexibilität meint, dass - anders als beispielsweise bei einer Spiralfeder - bei der Biegeverformung beim Aufwickeln nur relativ geringe Rückstellkräfte auftreten. Diese Eigenschaft wird auch als biegeschlaff oder forminstabil bezeichnet. Dadurch ist das zum Aufwickeln und zum Umkehren des Wickelsinns erforderliche Moment entsprechend gering, und vom Drehwinkel abhängige elastische Rückstellkräfte, die für die Funktion des Umdrehungsbegrenzers nicht relevant und unerwünscht sind, treten nicht auf oder sind vernachlässigbar gering. Durch die Verwendung hoch zugfester Fasern kann eine hohe Zugfestigkeit des Bandelements bei geringen Abmessungen realisiert werden. Das Bandelement kann beispielsweise ein flaches, gurtförmiges, gewebtes Band aufweisen.

Das Bandelement kann einen Kunststoff und/oder einen Gummiwerkstoff und/oder einen Glaswerkstoff und/oder einen Metallwerkstoff aufweisen, oder Kombinationen davon. Bevorzugt können Faser-Verbundwerkstoffe eingesetzt werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer weiteren perspektivischen Ansicht,
- Figur 3: eine schematische Axialansicht des Umdrehungsbegrenzers der Lenksäule gemäß Figuren 1 und 2 in einer ersten Drehwinkelposition (neutrale Mittelstellung),
- Figur 4: eine schematische Axialansicht des Umdrehungsbegrenzers wie in Figur 3 in einer zweiten Drehwinkelposition (Zwischenposition),
- Figur 5: eine schematische Axialansicht des Umdrehungsbegrenzers wie in Figur 3 in einer dritten Drehwinkelposition im Endanschlag (Anschlagposition bezüglich Drehung des Lenkrads nach links = im Uhrzeigersinn),
- Figur 6: eine Ansicht wie in Figur 5 nach dem Überschreiten des Grenzmoments (nach einem Überlastfall).

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

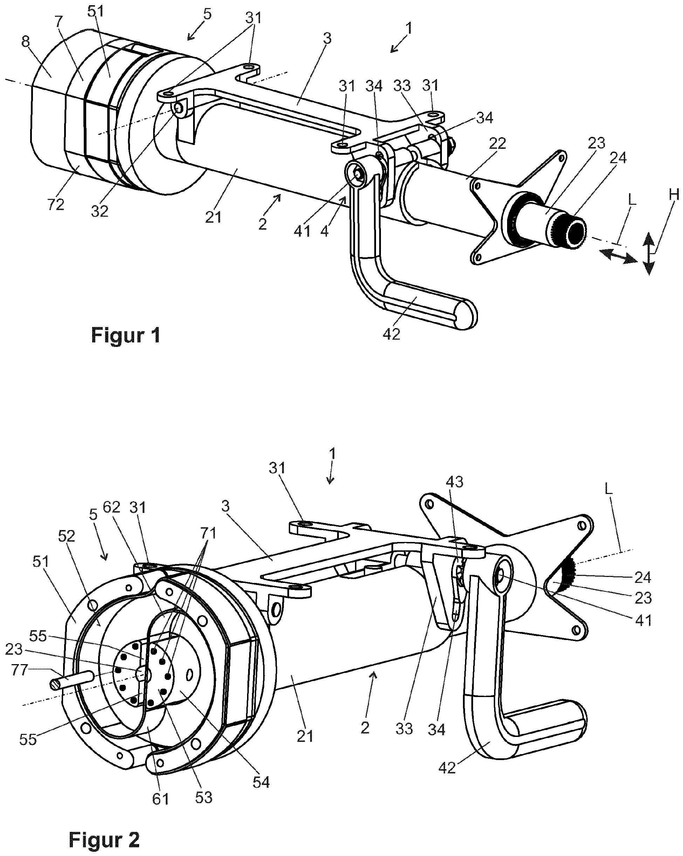

Figuren 1 und 2 zeigen in unterschiedlichen perspektivischen Ansichten eine Lenksäule 1 eines Steer-by-Wire-Lenksystems, in Figur 1 von links hinten, und in Figur 2 von links vorn, jeweils bezogen auf die Fahrtrichtung.

Die Lenksäule 1 umfasst eine Stelleinheit 2, die ein Lenksäulengehäuse 21 aufweist, welches auch als Manteleinheit oder äußeres Mantelrohr bezeichnet wird. In dem Lenksäulengehäuse 21 ist ein Mantelrohr 22 aufgenommen, in dem eine Lenkwelle 23 um die Längsachse L drehbar gelagert ist. Am bezüglich der Fahrtrichtung hinteren, dem Fahrer zugewandten Ende weist die Lenkwelle 23 einen Anschlussabschnitt 24 zur Anbringung eines hier nicht dargestellten Lenkrads auf. Zur Längsverstellung des Lenkrads ist das Mantelrohr 22 relativ zum Lenksäulengehäuse 21 in Richtung der Längsachse L teleskopartig verstellbar, wie mit dem Doppelpfeil parallel zur Längsachse L angedeutet ist.

Die Stelleinheit 2 ist von einer Trageinheit 3 gehalten, welche Befestigungsöffnungen 31 aufweist zur Anbringung an einer nicht dargestellten Karosserie eines Kraftfahrzeugs. In einem vorderen Bereich ist das Lenksäulengehäuse 21 an der Trageinheit 3 um eine horizontale, quer zur Längsachse L liegende Schwenkachse 32 verschwenkbar gelagert, wodurch eine Höhenverstellung des rückwärtigen, fahrerseitigen Endes der Lenkwelle 23 in der Höhenrichtung H ermöglicht wird.

Die Trageinheit 3 weist von der Schwenkachse 32 mit Abstand nach hinten zwei Seitenwangen 33 auf, die sich parallel zueinander nach unten erstrecken, und zwischen denen das Lenksäulengehäuse 21 aufgenommen ist.

Eine Spanneinrichtung 4 umfasst einen Spannbolzen 41, der durch in Höhenrichtung H verlaufende Langlöcher 34 durch beide Seitenwangen 33 hindurchgeführt ist. An dem Spannbolzen 41 ist ein Spannhebel 42 befestigt, mit dem der Spannbolzen 41 manuell um seine Achse gedreht werden kann.

Die Spanneinrichtung 4 weist ein Spanngetriebe 43 auf, welches eine Drehung des Spannbolzens 41 um seine Achse in einen Spannhub in Richtung seiner Achse umsetzt, beispielsweise mittels eines an sich bekannten Keilscheiben-, Nocken- oder Kippstiftgetriebes. Die Spannachse 41 ist über das Spanngetriebe 43 von außen gegen die beiden Seitenwangen 33 abgestützt. Wird der Spannhebel 41 durch manuelle Betätigung des Spannhebels 42 in die eine Richtung in die Spann- oder Fixierstellung gedreht, werden die beiden Seitenwangen 33 gegeneinander angedrückt, und dadurch wird das Lenksäulengehäuse zwischen den Seitenwangen 33 eingespannt, und dadurch relativ zur Trageinheit 3 in Höhenrichtung H fixiert. Dabei wird auch das Mantelrohr 22 in dem Lenksäulengehäuse 21 verspannt, so dass ebenfalls eine Fixierung in Richtung der Längsachse L erfolgt.

Wirr der Spannhebel 42 durch eine umgekehrte Drehung in die Lösestellung gebracht, wird der Spannhub aufgehoben, und die Einspannung des Lenksäulengehäuses 21 zwischen den Seitenwangen 33 gelöst. Der Spannbolzen 41 dann kann zur Höhenverstellung in den Langlöchern 34 in der Höhenrichtung H zusammen mit dem Lenksäulengehäuse 21 auf oder ab bewegt werden, und das Mantelrohr 22 kann in Richtung der Längsachse L zur Längsverstellung teleskopierend in das Lenksäulengehäuse 21 nach vorn eingeschoben oder nach hinten herausgezogen werden.

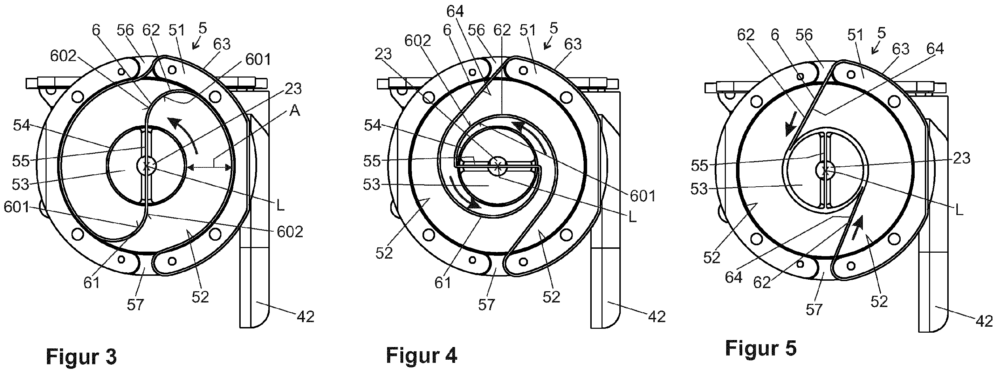

Ein erfindungsgemäß ausgestalteter Umdrehungsbegrenzer 5 ist vorn an der Lenksäule 1 angebracht. Dieser ist in Figur 2 in einer perspektivischen Ansicht vorn geöffnet dargestellt, um einen Blick ins Innere freizugeben. In den Figuren 3, 4 und 5 ist eine axiale Ansicht von vorn - in Richtung der Längsachse L - in unterschiedlichen Drehwinkelpositionen der Lenkwelle 23 gezeigt. Der Umdrehungsbegrenzer 5 ist mit einem nicht dargestellten Deckel verschließbar.

Der Umdrehungsbegrenzer 5 weist ein als Trommel 51 ausgebildetes Gehäuse auf, welches einen Teil des Lenksäulengehäuses 21 bildet, mit dem es einstückig ausgebildet, oder fest verbunden ist. Die Trommel 51 ist hohlzylindrisch ausgebildet, mit einem Innenmantel 52, der koaxial zur Längsachse L angeordnet ist.

In der Trommel 51 ist ein fest mit der Lenkwelle 23 verbundener Wickelkern 53 angeordnet, der einen zylindrischen, zur Längsachse L koaxialen Außenmantel 54 hat.

Der Außendurchmesser des Außenmantels 54 ist vorzugsweise kleiner oder gleich dem 0,5-fachen Innendurchmesser des Innenmantels 52. Der Innenmantel 52 hat von dem Außenmantel 54 einen radialen Abstand A (siehe Figur 3), der bevorzugt gleich oder größer ist als der 0,5-fache Durchmesser des Wickelkerns 53, also dem Außendurchmesser des Außenmantels 54.

Der Wickelkern 53 weist einen diametral, quer zur Längsachse L durchgehenden Querschlitz 55 auf, der nach vorn axial offen ist. Der 55 Querschlitz mündet diametral gegenüberliegend in dem Außenmantel 54.

Die Trommel 51 weist zwei einander bezüglich der Längsachse L diametral gegenüberliegende Querschlitze 56, 57 auf, welche Durchgänge vom Innenmantel 52 zur Außenseite der Trommel 51 bilden, und ebenfalls stirnseitig axial offen sind.

Ein Bandelement 6, welches als geschlossene Schlaufe ausgebildet ist, ist zwischen dem Wickelkern 53 und der Trommel 51 angebracht, wie in Figur 3 deutlich erkennbar ist. Das Bandelement 6 ist ein hoch flexibles, flaches Band mit einer Breite, welche an die axiale Breite des Außenmantels 54 angepasst ist, die auch in etwa der axialen Breite des Innenmantels 52 entspricht. Das Bandelement 6 kann ein hochfestes Fasergewebe oder einen Cordverbund aufweisen, und ist hoch flexibel, so dass bei einer Umbiegung quer zu seiner Längserstreckung und seiner Breite nur eine vernachlässigbar geringe elastische Rückstellkraft auftritt.

Das Bandelement 6 ist durch den Querschlitz 55 des Wickelkerns 53 quer zur Längsachse L hindurchgeführt, wobei der Querschlitz 55 mit einer Einführfase versehen ist, um eine Beschädigung des Bandelements 6 wirksam zu verhindern. Dadurch wird eine drehfeste Verbindung des Bandelements 6 mit dem Wickelkern 53 realisiert. Der auf der einen Seite aus dem Wickelkern 53 radial austretende Bandabschnitt 61 erstreckt sich durch den einen Querschlitz 56 hindurch zur Außenseite der Trommel 51, und der auf der anderen Seite aus dem Wickelkern 53 radial austretende Bandabschnitt 62 erstreckt sich durch den anderen Querschlitz 57 hindurch zur Außenseite der Trommel 51. Die Bandabschnitte 61 und 62 sind durch einen außen um die Trommel 51 herumgeführten Bandabschnitt 63 als geschlossene Schlaufe miteinander verbunden. Dadurch ist das Bandelement 6 in Umfangsrichtung bezüglich dem Innenmantel 52 fixiert.

Die Funktion des Umdrehungsbegrenzers 3 wird anhand der Phasendarstellungen in den Figuren 3, 4 und 5 erläutert, die jeweils unterschiedliche Drehwinkelstellungen der Lenkwelle 23 und des damit verbundenen Wickelkerns 53 zeigen.

Figur 3 zeigt die neutrale Mittelstellung. Die beiden Bandabschnitte 61, 62 münden radial aus dem Querschlitz 55 aus und erstrecken sich zugspannungsfrei bogenförmig bis zum Innenmantel 52, an dem sie sich bis zu den Querschlitzen 56, 57 anschmiegen, wo sie nach außen herausgeführt sind.

Bei einer Drehung der Lenkwelle 23 im Uhrzeigersinn dreht sich der Wickelkern 53 in der Ansicht der Figuren 2, 3, 4 und 5 entgegen dem Uhrzeigersinn, wie mit dem gebogenen Pfeil angedeutet.

Figur 4 zeigt eine Zwischenposition, in der deutlich erkennbar ist, wie die Bandabschnitte in Form einer zweigängigen Spirale auf dem Außenmantel 53 auf dem Wickelkern 53 aufgewickelt werden.

Die beiden Bandabschnitte 61, 62 werden durch weitere Drehung weiter aufgewickelt, bis die verbleibenden freien Bereiche der Bandabschnitte 61, 62 als Zugtrume zwischen dem Wickelkern 53 und den Schlitzen 56, 57 der Trommel 51 straff gespannt sind, wie in Figur 5 erkennbar ist. Diese stellt die eine Anschlagposition dar, also die Endposition des maximalen Drehwinkels, in der sich der Umdrehungsbegrenzer 5 im Endanschlag befindet. Ein dann über das Lenkrad in die Lenkwelle 23 eingegebenes Lenkmoment wirkt als Zugspannung auf die Bandabschnitte 61, 62, und dadurch wird eine weitere Drehung verhindert.

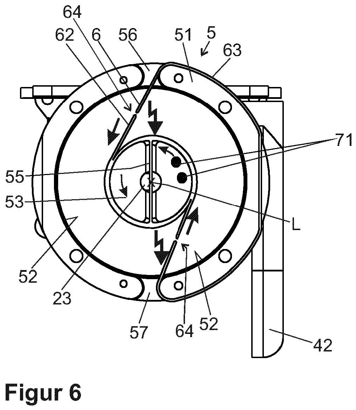

Jeweils im Bereich eines Bandabschnitts 61, 62 ist ein Sollbruchabschnitt 64 ausgebildet, in dem der Bandquerschnitt des Bandelements 6 lokal verringert ist. Dadurch ist die Reiß- bzw. Zugfestigkeit so weit bis auf eine Grenzreißfestigkeit (Grenzzugfestigkeit) definiert herabgesetzt, dass beim Überschreiten eines gegen den Endanschlag gerichteten, von der Lenkwelle 23 relativ zum Umdrehungsbegrenzer 5 ausgeübten Grenzmoments, nämlich des Endanschlag-Bruchmoments, die Sollbruchabschnitte 64 reißen und danach durchtrennt sind, wie in Figur 6 dargestellt ist, und die weitere Drehung der Lenkwelle 23 relativ zum Lenksäulengehäuse 23 freigeben.

Die Lenkwelle 23 ist mit einem Drehsensor 7 drehfest verbunden, der an der Trommel 51 des Umdrehungsbegrenzer 5 angesetzt ist, wie in Figur 1 dargestellt ist. Bevorzugt bildet ein einstückig ausgebildeter Wellenabschnitt der Lenkwelle 23 eine Sensorwelle diese Drehsensors 7. Beispielsweise können Magnetelemente 71, beispielsweise Permanentmagnete, an dem Wickelkern 53 angebracht und auf diese Weise fest mit der Lenkwelle 23 vebunden sein, wie dies schematisch in Figur 2 gezeigt ist, in welcher ein feststehendes, in Figur 1 mit dem Lenksäulengehäuse 21 verbundenes Sensorgehäuse 72 (= feststehender Teil des Drehsensors 7) des Drehsensors 7 abgenommen ist. Eine Mehrzahl von Magnetelementen 71 kann wie dargestellt über den Umfang verteilt angeordnet sein, die bei einer Drehung der Lenkwelle 23 aneinem korrespondierenden Nehmerelementen 77 im feststehenden Sensorgehäuse 72 des Drehsensors 7 vorbei rotiert werden. Dadurch kann der Drehwinkel der Lenkwelle 23 erfasst werden.

In den Figuren 3 bis 5 sind die Magnetelemente 71 nicht dargestellt, um die Übersichtlichkeit der Figuren zu verbessern. In der Figur 6 sind lediglich einzelne Magnetelemente 71 dargestellt, um die Übersichtlichkeit zu erhöhen. Die Magnetelemente 71 sind in sämtlichen Figuren nur schematisiert dargestellt.

Es können alternativ oder zusätzlich auch nach andren Messprinzipien arbeitende Drehsensoren 7 vorgesehen sein, beispielsweise optisch, kapazitiv, resistiv oder dergleichen. Insbesondere kann ein Hallsensor oder ein anderer Magnetfeldsensor zum Einsatz kommen.

Für die Erfindung ist wesentlich, dass die Lenkwelle 23 ein höheres maximales Übertragungsdrehmoment zum Drehsensor 7 übertragen kann, welches in jedem Fall höher ist als das Grenzmoment. Dadurch ist die Funktion des Drehsensors 7 auch dann sichergestellt, wenn der in Figur 6 dargestellte Überlastfall mit der Durchtrennung des Bandelements 6 eintritt. In diesem Fall dreht die Lenkwelle 23 zusammen mit den Magnetelements 71 weiter, wie in Figur 6 mit den gebogenen Pfeilen angedeutet.

Jeder Bandabschnitt 61, 62 weist eine erste Oberfläche 601 auf und eine dazu gleichsinnig ausgebildete zweite Oberfläche 602 auf, wobei in dem einen Wickelsinn die erste Oberfläche 601 mit dem Wickelkern 53 in Kontakt bringbar ist und die zweite Oberfläche 602 in dem umgekehrten Wickelsinn mit dem Wickelkern in Kontakt bringbar ist. Mit anderen Worten liegt je nach Wickelsinn die erste Oberfläche 601 oder die zweite Oberfläche 602 des Bandabschnitts 61, 62 an dem Wickelkern 53 an.

Ausgehend von der neutralen Position von Figur 3 kann die Lenkwelle 23 auch in die entgegengesetzte Drehrichtung gedreht werden. Dann werden die Bandabschnitte 61, 62 in einem zum Wickelsinn der Figuren 4 und 5 entgegengesetzten Wickelsinn auf dem Wickelkern 53 aufgewickelt. Dabei treten zu den Figuren 4 und 5 spiegelbildliche Anordnungen auf.

Die Lenkwelle 23 ist mit einem Feedback-Aktuator 8 wirkverbunden, der einen Elektromotor umfasst, wobei dieser derart mit der Lenkwelle 23 gekoppelt ist, dass durch diesen ein Drehmoment in die Lenkwelle eintragbar ist.

### Bezugszeichenliste

- 1: Lenksäule
- 2: Stelleinheit
- 21: Lenksäulengehäuse
- 22: Mantelrohr
- 23: Lenkwelle
- 24: Anschlussabschnitt
- 3: Trageinheit
- 31: Befestigungsöffnungen
- 32: Schwenkachse
- 33: Seitenwangen
- 34: Langloch
- 4: Spanneinrichtung
- 41: Spannbolzen
- 42: Spannhebel
- 43: Spanngetriebe
- 5: Umdrehungsbegrenzer
- 51: Trommel
- 52: Innenmantel
- 53: Wickelkern
- 54: Außenmantel
- 55: Querschlitz
- 56, 57: Querschlitze
- 6: Bandelement
- 61, 62: Bandabschnitte
- 63: Bandabschnitt
- 64: Sollbruchabschnitt
- 7: Drehsensor
- 71: Magnetelement
- 72: Sensorgehäuse (feststehender Teil)
- 77: Nehmerelement
- 8: Feedback-Aktuator
- L: Längsachse
- H: Höhenrichtung

## Patentansprüche

1. Lenksäule (1) für ein Kraftfahrzeug, umfassend eine relativ zu einer Trageinheit (3) um ihre Längsachse (L) drehbar gelagerte Lenkwelle (23), einen Umdrehungsbegrenzer (5) mit einem Endanschlag zur Begrenzung der Rotation der Lenkwelle (23), und einen über eine drehmomentschlüssige Verbindung mit der Lenkwelle (23) gekuppelten Drehsensor (7), wobei der Umdrehungsbegrenzer (5) ein Grenzmoment aufweist, bei dessen Überschreiten die Rotation der Lenkwelle (23) über den Endanschlag hinaus freigegeben wird, wobei das Grenzmoment kleiner ist als ein maximales Übertragungsmoment der Verbindung zwischen Lenkwelle (23) und Drehsensor (7),
**dadurch gekennzeichnet, dass** der Umdrehungsbegrenzer (5) eine Sollbrucheinrichtung (64) aufweist.

2. Lenksäule nach Anspruch 1, **dadurch gekennzeichnet, dass** der Umdrehungsbegrenzer (5) eine Überlastkupplung aufweist.

3. Lenksäule nach einem der vorangehenden Ansprüche, **dadurch gekennzeichnet, dass** die Lenkwelle (23) drehfest mit einer Sensorwelle des Drehsensors (7) verbunden ist.

4. Lenksäule nach einem der vorangehenden Ansprüche, **dadurch gekennzeichnet, dass** die Lenkwelle (23) einstückig mit einer Sensorwelle des Drehsensors (7) ausgebildet ist.

5. Lenksäule nach einem der vorangehenden Ansprüche, **dadurch gekennzeichnet, dass** der Drehsensor (7) einen frei rotierbaren Drehgeber (53) aufweist.

6. Lenksäule nach einem der vorangehenden Ansprüche, **dadurch gekennzeichnet, dass** der Drehsensor (7) separat vom dem Umdrehungsbegrenzer ausgebildet ist.

7. Lenksäule nach einem der vorangehenden Ansprüche, **dadurch gekennzeichnet, dass** mindestens zwei Drehsensoren (7) vorgesehen sind.

8. Lenksäule nach einem der vorangehenden Ansprüche, **dadurch gekennzeichnet, dass** der Drehsensor (7) mindestens einen Drehwinkel- und/oder Drehmomentsensor aufweist.

9. Lenksäule nach einem der vorangehenden Ansprüche, **dadurch gekennzeichnet, dass** der Drehsensor (7) ausgebildet ist, eine Drehung der Lenkwelle (23) über den Endanschlag hinaus zu erfassen.

10. Lenksäule nach einem der vorangehenden Ansprüche, **dadurch gekennzeichnet, dass** ein Feedback-Aktuator (8) mit der Lenkwelle (23) gekoppelt ist.

11. Lenksäule nach einem der vorangehenden Ansprüche, **dadurch gekennzeichnet, dass** die Lenkwelle (23) in einem von der Trageinheit (3) gehaltenen Lenksäulengehäuse (21) gelagert ist.

12. Lenksäule nach Anspruch 11 **dadurch gekennzeichnet, dass** das Lenksäulengehäuse (21) relativ zur Trageinheit (3) in einer Längsrichtung parallel zur Längsachse (L) und/oder in einer Höhenrichtung (H) quer zur Längsachse (L) verstellbar ist.

13. Lenksäule nach einem der vorangehenden Ansprüche 11 bis 12, **dadurch gekennzeichnet, dass** der Umdrehungsbegrenzer (5) einen mit der Lenkwelle (23) drehfest verbundenen Wickelkern (53) aufweist, an dem ein mit der Trageinheit (3) verbundenes, langgestrecktes und quer zu seiner Längserstreckung flexibel verformbares Bandelement (6) angebracht ist, welches mindestens einen Bandabschnitt (61, 62) aufweist, der auf dem Wickelkern (53) in einem Wickelsinn um die Längsachse (L) aufwickelbar ist.

14. Lenksäule nach einem der vorangehenden Ansprüche 11 bis 13, **dadurch gekennzeichnet, dass** der Wickelsinn des Bandabschnitts (61, 62) umkehrbar ist.

## Claims

1. A steering column (1) for a motor vehicle, comprising a steering shaft (23) which is mounted so as to be rotatable about its longitudinal axis (L) relative to a carrying unit (3), a rotation limiter (5) having an end stop for limiting the rotation of the steering shaft (23), and a rotary sensor (7) coupled to the steering shaft (23) by means of a torque-locked connection,
wherein the rotation limiter (5) has a threshold torque and, if said threshold torque is exceeded, the rotation of the steering shaft (23) beyond the end stop is permitted, wherein the threshold torque is less than a maximum transmission torque of the connection between the steering shaft (23) and rotary sensor (7),
**characterized in that**
the rotation limiter (5) has a predetermined breaking device (64).

2. The steering column as claimed in claim 1, **characterized in that** the rotation limiter (5) has an overload clutch.

3. The steering column as claimed in one of the preceding claims, **characterized in that** the steering shaft (23) is connected fixedly in terms of rotation to a sensor shaft of the rotary sensor (7).

4. The steering column as claimed in one of the preceding claims, **characterized in that** the steering shaft (23) is configured in one piece with a sensor shaft of the rotary sensor (7).

5. The steering column as claimed in one of the preceding claims, **characterized in that** the rotary sensor (7) has a freely rotatable rotary encoder (53).

6. The steering column as claimed in one of the preceding claims, **characterized in that** the rotary sensor (7) is configured separately from the rotation limiter.

7. The steering column as claimed in one of the preceding claims, **characterized in that** at least two rotary sensors (7) are provided.

8. The steering column as claimed in one of the preceding claims, **characterized in that** the rotary sensor (7) has at least one rotational angle sensor and/or torque sensor.

9. The steering column as claimed in one of the preceding claims, **characterized in that** the rotary sensor (7) is configured to detect a rotation of the steering shaft (23) beyond the end stop.

10. The steering column as claimed in one of the preceding claims, **characterized in that** a feedback actuator (8) is coupled to the steering shaft (23).

11. The steering column as claimed in one of the preceding claims, **characterized in that** the steering shaft (23) is mounted in a steering column housing (21) held by the carrying unit (3).

12. The steering column as claimed in claim 11, **characterized in that** the steering column housing (21) is adjustable relative to the carrying unit (3) in a longitudinal direction parallel to the longitudinal axis (L) and/or in a vertical direction (H) transversely to the longitudinal axis (L).

13. The steering column as claimed in one of the preceding claims 11 to 12, **characterized in that** the rotation limiter (5) has a winding core (53) which is connected fixedly in terms of rotation to the steering shaft (23), an elongated strap element (6) which is connected to the carrying unit (3) and which is flexibly deformable transversely to its longitudinal extent being attached thereto and the strap element having at least one strap portion (61, 62) which can be wound onto the winding core (53) in a winding direction about the longitudinal axis (L).

14. The steering column as claimed in one of the preceding claims 11 to 13, **characterized in that** the winding direction of the strap portion (61, 62) can be reversed.

## Revendications

1. Colonne de direction (1) pour un véhicule automobile, comprenant un arbre de direction (23) qui est monté de manière à pouvoir tourner autour de son axe longitudinal (L) par rapport à une unité de transport (3), un limiteur de rotation (5) ayant une butée pour limiter la rotation de l'arbre de direction (23), et un capteur rotatif (7) couplé à l'arbre de direction (23) au moyen d'une liaison à verrouillage de couple,
le limiteur de rotation (5) a un couple seuil et, si ce couple seuil est dépassé, la rotation de l'arbre de direction (23) au-delà de la butée est autorisée, le couple seuil étant inférieur à un couple de transmission maximal de la connexion entre l'arbre de direction (23) et le capteur rotatif (7),
**caractérisé par le fait que**
le limiteur de rotation (5) comporte un dispositif de rupture prédéterminé (64).

2. Colonne de direction selon la revendication 1, **caractérisée par le fait que** le limiteur de rotation (5) comporte un embrayage de surcharge.

3. Colonne de direction selon l'une des revendications précédentes, **caractérisée par le fait que** l'arbre de direction (23) est relié fixement en rotation à un arbre de capteur du capteur rotatif (7).

4. Colonne de direction selon l'une des revendications précédentes, **caractérisée par le fait que** l'arbre de direction (23) est configuré en une seule pièce avec un arbre de capteur du capteur rotatif (7).

5. Colonne de direction selon l'une des revendications précédentes, **caractérisée par le fait que** le capteur rotatif (7) comporte un codeur rotatif (53) librement rotatif.

6. Colonne de direction selon l'une des revendications précédentes, **caractérisée par le fait que** le capteur de rotation (7) est configuré séparément du limiteur de rotation.

7. Colonne de direction selon l'une des revendications précédentes, **caractérisée par** la présence d'au moins deux capteurs rotatifs (7).

8. Colonne de direction selon l'une des revendications précédentes, **caractérisée par le fait que** le capteur rotatif (7) comporte au moins un capteur d'angle de rotation et/ou un capteur de couple.

9. Colonne de direction selon l'une des revendications précédentes, **caractérisée par le fait que** le capteur rotatif (7) est configuré pour détecter une rotation de l'arbre de direction (23) au-delà de la butée.

10. Colonne de direction selon l'une des revendications précédentes, **caractérisée par le fait qu'**un actionneur de rétroaction (8) est couplé à l'arbre de direction (23).

11. Colonne de direction selon l'une des revendications précédentes, **caractérisée par le fait que** l'arbre de direction (23) est monté dans un carter de colonne de direction (21) maintenu par l'unité porteuse (3).

12. Colonne de direction selon la revendication 11, **caractérisée par le fait que** le boîtier de la colonne de direction (21) est réglable par rapport à l'unité de transport (3) dans une direction longitudinale parallèle à l'axe longitudinal (L) et/ou dans une direction verticale (H) transversale à l'axe longitudinal (L).

13. Colonne de direction selon l'une des revendications précédentes 11 à 12, **caractérisée en ce que** le limiteur de rotation (5) comporte un noyau d'enroulement (53) qui est relié fixement en termes de rotation à l'arbre de direction (23), un élément de sangle allongé (6) qui est relié à l'unité de transport (3) et qui est déformable de manière flexible transversalement à son étendue longitudinale y étant fixé et l'élément de sangle comportant au moins une portion de sangle (61, 62) qui peut être enroulée sur le noyau d'enroulement (53) dans une direction d'enroulement autour de l'axe longitudinal (L).

14. Colonne de direction selon l'une des revendications précédentes 11 à 13, **caractérisée par le fait que** le sens d'enroulement de la portion de sangle (61, 62) peut être inversé.
